# EUROPEAN PATENT APPLICATION

(11) **EP 3 842 483 A1**
(43) Date of publication of application: **30.06.2021**
(21) Application number: 19852228.6
(22) Date of filing: 19.08.2019
(51) Int. Cl.: C08J 11/16, B01J 21/06, B01J 23/22, B01J 23/26, B01J 23/28, B01J 23/30, B01J 23/72, C08J 11/12

(54) **METHOD FOR DECOMPOSING PLASTIC COMPOSITE**

(30) Priority: 22.08.2018 JP 2018155596
(71) Applicant: MITSUBISHI HEAVY INDUSTRIES, LTD., Chiyoda-ku, Tokyo 100-8332 (JP)
(72) Inventor: NOCHI, Katsumi, Tokyo 100-8332 (JP)
(74) Representative: Hoffmann Eitle
(86) International application number: PCT/JP2019/032253
(87) International publication number: WO 2020/040081

(57) **Abstract**

Provided is a method for decomposing a plastic composite with which it is possible to sufficiently decompose the matrix resins of the plastic composite in a short time even when the heating temperature of the plastic composite is low. In this method for decomposing a plastic composite, the plastic composite is brought into contact with an inorganic oxide catalyst having a band gap of 4 eV or less in a reactor, and the atmospheric temperature in the reactor is set at 380 to 530°C in the presence of oxygen, and the surface temperature of the plastic composite is 480 to 650°C, which is at least 50°C higher than the atmospheric temperature.

## Description

### Technical Field

The present invention relates to a method for decomposing a plastic composite.

### Background Art

Since it is difficult to recycle waste materials of plastic composites such as carbon fiber reinforced plastics (CFRP) with the current technology, most of the waste materials are landfilled or incinerated. In particular, in a case where a thermosetting resin such as an epoxy resin is used as a matrix of the plastic composite, the thermosetting resin and reinforcing fiber cannot be easily separated once cured.

Thus, a thermal decomposition method or a thermal semiconductor method has been developed as a technique for processing or recycling the plastic composite. For example, PTL 1 describes, as the thermal semiconductor method, a method for processing a plastic composite, in which a polymer of the plastic composite is decomposed by bringing a catalyst carrying honeycomb in which a semiconductor such as chromium oxide or titanium oxide is carried on the front surface of a porous body is brought into contact with the front surface of a plastic composite plate and by heating the catalyst carrying honeycomb together with an object to be processed at a temperature at which the semiconductor becomes an intrinsic electric conduction region in the presence of oxygen.

Additionally, as a method for decomposing waste plastic/organic substance, which is not a plastic composite, PTL 2 describes a catalyst for decomposing waste plastic/organic substance that carries copper oxide and contains granules of titanium oxide whose active component is titanium oxide. In this catalyst, it is described that the shape of the granules is substantially spherical (here, substantially spherical means that the angle at which the granules start to slide is 0.5 degrees to 15.0 degrees and the angle at which all the granules finish sliding is 2.0 degrees to 30.0 degrees), 70% or more of all the granules have a particle diameter of 0.2 mm to 1.6 mm, and the amount of copper oxide carried is 0.1% by weight to 10.0% by weight.

### Citation List

### Patent Literature

[PTL 1] Japanese Patent No. 5904487
[PTL 2] Japanese Patent No. 5655162

### Summary of Invention

### Technical Problem

The thermal semiconductor method disclosed in PTL 1 can certainly decompose a plastic composite. In this method, however, it is described that it takes 10 to 15 minutes to heat the plastic composite to 500°C. Thus, in order to decompose and process a large amount of the plastic composite, there is a problem that continuous processing cannot be performed because a large amount of energy is consumed and it takes a long time to perform the decomposition processing. Additionally, the catalyst disclosed in PTL 2 is specially prepared, and it is desired that the decomposition processing of the plastic composite can be easily performed by a commercially available catalyst.

Thus, in view of the above problems, an object of the present disclosure is to provide a method for decomposing a plastic composite, which can sufficiently decompose a matrix resin of a plastic composite in a short time even when the plastic composite is heated at a low temperature.

### Solution to Problem

In order to achieve the above object, a method for decomposing a plastic composite according to at least one embodiment of the present invention is a method including bringing the plastic composite into contact with an inorganic oxide catalyst having a band gap of 4 eV or less in a reactor; setting an atmospheric temperature in the reactor to 380 to 530°C in the presence of oxygen; and setting a surface temperature of the plastic composite to 480 to 650°C, which is at least 50°C higher than the atmospheric temperature.

In some embodiments, the atmospheric temperature in the reactor is preferably 380 to 450°C. Additionally, it is preferable that the catalyst has a granular shape or a combination of the granular shape and a plate shape and/or a honeycomb shape. Moreover, it is preferable that the layered surfaces of the plastic composite are brought into contact with the catalyst. In a case where the catalyst is a granular catalyst, the granular catalyst may be spread over a front surface and a back surface of the plastic composite and may cover all or some surfaces of layered surfaces of the plastic composite. Alternatively, in a case where the catalyst is a honeycomb type catalyst, all the four surfaces that are layered surfaces of the plastic composite may be surrounded by the honeycomb type catalyst.

In some embodiments, it is preferable that the inorganic oxide having a band gap of 4 eV or less is one kind or a combination of two or more kinds selected from the group consisting of titanium oxide, vanadium oxide, tungsten oxide, molybdenum oxide, and copper oxide.

In some embodiments, the plastic composite and the catalyst may be loaded on a portion such as a central portion of a stainless steel mesh plate in the reactor, and oxygen may be supplied from below the mesh plate.

### Advantageous Effects of Invention

In this way, according to the present disclosure, by bringing the inorganic oxide catalyst having a band gap of 4 eV or less into contact with the plastic composite, even when the atmospheric temperature in the reactor is set to a low temperature of 380 to 530°C in the presence of oxygen, hydrocarbon and carbon monoxide in a gas generated by the decomposition of the matrix resin of the plastic composite can be oxidized by the catalyst of the inorganic oxide, and the surface temperature of the plastic composite can be 480 to 650°C, which is at least 50°C higher than the atmospheric temperature, due to the combustion heat generated by the oxidization. Thus, in the related art, even when the plastic composite is heated at a temperature lower than the temperature required to sufficiently decompose the matrix resin of the plastic composite, the matrix resin of the plastic composite can be sufficiently decomposed, and the plastic composite can be efficiently processed. In addition, when the surface temperature of the plastic composite is too high, the reinforcing fiber of the plastic composite deteriorates and becomes difficult to recycle. Therefore, the surface temperature of the plastic composite is 650°C or lower.

In particular, even when the atmospheric temperature in the reactor is a low temperature of 380 to 450°C, the surface temperature of the plastic composite can be further largely raised by the shape of the catalyst and the disposition in which the catalyst is brought into contact with the plastic composite. For example, by using a granular shape or a combination of the granular shape and a honeycomb shape as the catalyst or adopting a disposition in which the layered surfaces of the plastic composite are brought into contact with the catalyst, the surface temperature of the plastic composite can be made higher than the atmospheric temperature by 100°C or higher. Brief Description of Drawings

Figs. 1A and 1B are a front view and a side view illustrating an embodiment of the disposition of a catalyst onto a plastic composite in at least one embodiment according to the present disclosure.
Figs. 2A and 2B are a front view and a side view illustrating another embodiment of the disposition of the catalyst onto the plastic composite in at least one embodiment according to the present disclosure.
Fig. 3 is a perspective view illustrating still another embodiment of the disposition of the catalyst onto the plastic composite in at least one embodiment according to the present disclosure.
Fig. 4 is a schematic diagram illustrating an embodiment of a method for decomposing the plastic composite in at least one embodiment according to the present disclosure.
Fig. 5 is a graph illustrating the results of Test Example 1 of Example 1.
Fig. 6 is a graph illustrating the results of Test Example 2 of Example 1.
Fig. 7 is a graph illustrating the results of Test Example 3 of Example 1.
Fig. 8 is a graph illustrating the results of Test Example 4 of Example 1.
Fig. 9 is a graph illustrating the results of a test example of Example 2.
Fig. 10 is a graph illustrating the results of a test example of Example 3.
Fig. 11 is a graph illustrating the results of a test example of Example 4.

### Description of embodiments

Hereinafter, embodiments of a method for decomposing a plastic composite according to at least one embodiment of the present disclosure will be described with reference to the accompanying drawings.

In the method for decomposing a plastic composite of the present embodiment, the plastic composite is brought into contact with an inorganic oxide catalyst having a band gap of 4 eV or less in a reactor, and the atmospheric temperature in the reactor is heated to a predetermined setting temperature in the presence of oxygen, so that the surface temperature of the plastic composite is made higher than the atmospheric temperature.

The plastic composite to be processed is not particularly limited as long as a composite material of a reinforcing fiber and a matrix resin is provided. However, the reinforcing fiber may be carbon fiber or glass fiber, and the matrix resin may be a thermosetting plastic or a thermoplastic. Examples of the thermosetting plastic include phenol resin, urethane foam, polyurethane, urea resin, epoxy resin, unsaturated polyester resin, melamine resin, and alkyd resin. Examples of the thermoplastic resin include polycarbonate, polyethylene, polypropylene, polyvinyl chloride, polystyrene, polyethylene terephthalate, ABS resin, polyamide, polyimide, methacrylic resin, polyvinyl alcohol, polyacetal, petroleum resin, vinylidene chloride resin, polybutylene terephthalate, polybutene, fluororesin, polyacrylate, and the like.

Examples of the inorganic oxide having a band gap of 4 eV or less used as the catalyst include respective oxides such as copper (Cu), titanium (Ti), vanadium (V), tungsten (W), molybdenum (Mo), and chromium (Cr). These inorganic oxides may be used alone or in combination of plural of kinds. For example, a catalyst that is currently used as a denitration catalyst, in which a vanadium oxide and a tungsten or molybdenum oxide are added to titanium oxide, can be used. The band gap of the catalyst is preferably 3 eV or less and more preferably 2 eV or less.

Although the shape of the catalyst may be a honeycomb type, a plate shape, or a granular shape, it is preferable to use a granular catalyst, particularly, in order to make the surface temperature of the plastic composite higher than the atmospheric temperature of the reactor. The lower limit of the diameter of the granular shape is preferably 1 mm or more, more preferably 1.5 mm or more, still more preferably 2 mm or more, in order to facilitate separation from the decomposition product of the plastic composite. The upper limit of the diameter of the granular shape is preferably 10 mm or less, more preferably 5 mm or less, still more preferably 4 mm or less in order to increase the number of contact points between the plastic composite and the granular catalyst and promote the reaction uniformly. Although a granular catalyst having a diameter within such a range is commercially available, the granular catalyst can be obtained, for example, by pressure-forming a commercially available inorganic oxide and then crushing the pressure-formed inorganic oxide to rectify the crushed inorganic oxide with a filter or the like so as to be within a predetermined diameter range.

As the honeycomb type catalyst, the lower limit of one side of each cell is preferably 2.8 mm or more, more preferably 3.5 mm or more, and still more preferably 5.65 mm or more in order to increase the number of contact points between the plastic composite and the honeycomb type catalyst and uniformly promote the reaction. The upper limit of one side of each cell is preferably 9 mm or less, more preferably 6.4 mm or less, and still more preferably 6.25 mm or less in order to increase the number of contact points and uniformly promote the reaction. As the plate-like catalyst, the lower limit of the thickness is preferably 0.3 mm or more, more preferably 0.6 mm or more, and still more preferably 0.7 mm or more in order to sufficiently promote the reaction with the plastic composite. The upper limit of the thickness of the plate-like catalyst is preferably 1 mm or less, more preferably 0.9 mm or less, and still more preferably 0.8 mm or less because if the catalyst is too thick, the catalyst that does not participate in the reaction is generated.

As the disposition of the catalyst with respect to the plastic composite, first, in order to sufficiently exhibit the effect of the catalyst, it is preferable to dispose the catalyst that the contact percentage of the catalyst with respect to an outer surface area of the plastic composite is 20% or more. Additionally, the plastic composite has a laminated structure manufactured by laminating a plurality of prepregs in which the reinforcing fiber is impregnated with the matrix resin and curing the prepregs under pressure heating conditions. In order to make the surface temperature of the plastic composite higher than the atmospheric temperature of the reactor, it is preferable to dispose the catalyst, particularly, on a surface where the laminated structure of the plastic composite is visible in a cross-section (referred to as "layered surface" in the present specification).

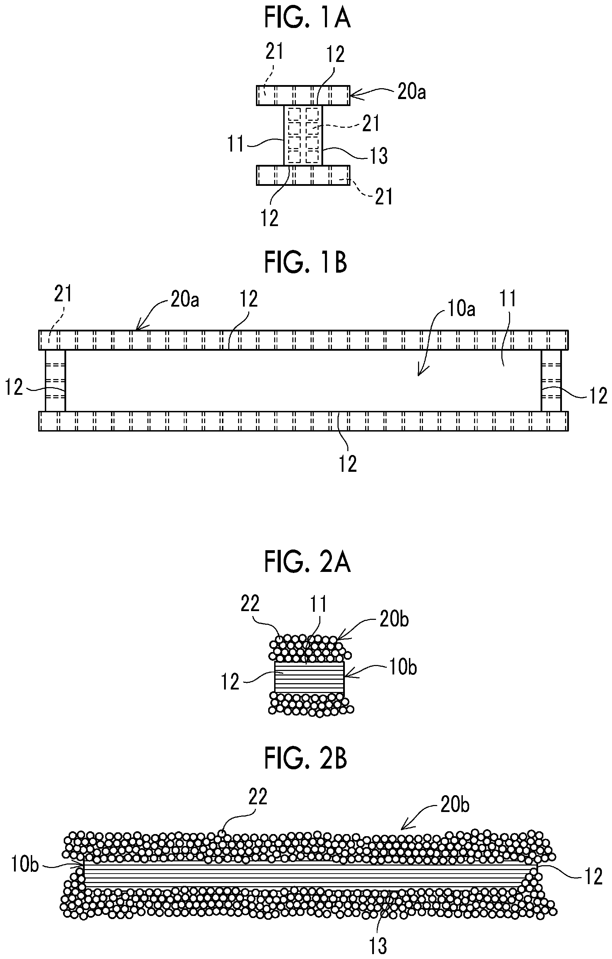

For example, Figs. 1A and 1B illustrate a disposition in which a plastic composite 10a having a thin and long shape is surrounded by a plurality of cells 21 of a honeycomb type catalyst 20a. The honeycomb type catalyst 20a may not be disposed on a front surface 11 and a back surface 13 of the plastic composite 10a having a large area, and all four surfaces which are layered surfaces 12 may be surrounded by the honeycomb type catalyst 20a.

Additionally, for example, Figs. 2A and 2B illustrate a disposition in which a plastic composite 10b having a thin and long shape is surrounded by a plurality of granular catalysts 22 of the catalyst 20b. The granular catalyst 22 may be spread over the front surface 11 and the back surface 13 of the plastic composite 10b having a large area, and all or some of the four surfaces that are layered surfaces 12 may be covered with the granular catalyst 22. It is not necessary that the total area of the four surfaces that are the layered surfaces 12 of the plastic composite 10 is in contact with the catalyst 20, and for example, 25% or more of the total area of the layered surface 12 is preferably in contact with the catalyst, and 50% or more thereof is more preferably in contact with the catalyst.

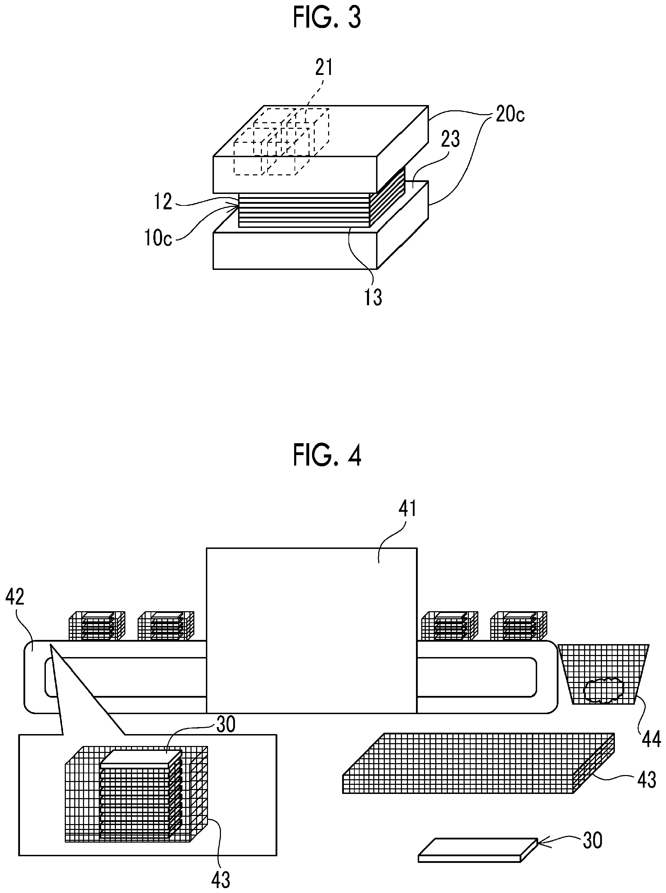

Moreover, for example, as illustrated in Fig. 3, only the front surface 11 and the back surface 13 of the plastic composite 10c may be disposed so as to be sandwiched between honeycomb type catalysts 20c consisting of a plurality of cells 21. Additionally, the catalyst may be a combination of the granular catalyst and the honeycomb type catalyst, and as illustrated in Fig. 3, the granular catalyst (not illustrated) may be placed on an overhanging portion 23 of the honeycomb type catalyst 20c having an area larger than the area of the back surface 13 of the plastic composite 10c such hat the catalyst comes into contact with the layered surfaces 12 of the plastic composite 10c. In addition, the plate-like catalyst may be used instead of the honeycomb type catalyst, or the plastic composite may be sandwiched between the honeycomb type catalyst and the plate-like catalyst.

Then, as illustrated in Fig. 4, an object 30 to be processed in which the catalyst 20 is brought into contact with the plastic composite 10 is put into a reactor 41 such as a baking furnace, and the decomposition processing of the plastic composite is performed in the reactor 41. Since the decomposition of the matrix resin of the plastic composite is an oxidation reaction, sufficient oxygen is required in the reactor 41. Thus, the reactor 41 is provided with equipment (not illustrated) that supplies an oxygen-containing gas such as air.

As illustrated in Fig. 4, the object 30 to be processed is preferably placed at a central portion of a stainless steel mesh plate 43 and subjected to decomposition processing in the reactor 41. Accordingly, even when the oxygen-containing gas is supplied from the lower surface of the object 30 to be processed, the oxygen-containing gas can be uniformly supplied to a lower surface, side surfaces, and an upper surface of the object 30 to be processed through the mesh plate 43. Further placement of the mesh plate 43 on the object 30 to be processed and placement of the object 30 to be processed on the mesh plate 43 may be repeated, and the plurality of objects 30 to be processed may be put into the reactor 41 at one time. The objects 30 to be processed and the mesh plates 43 in a plurality of stages can be transported into the reactor 41 by transportation means 42 such as a belt conveyor. The object 30 to be processed and the mesh plate 43, which have been subjected to the decomposition processing for a predetermined period of time, are discharged from the reactor 41 by the transportation means 42, and then the reinforcing fiber remaining after the matrix resin is sufficiently decomposed is recovered by recovery means 44.

The atmospheric temperature in the reactor 41 is set to 380 to 530°C. By using the inorganic oxide having a band gap of 4 eV or less as the catalyst, even when the inside of the reactor 41 is set to such a low atmospheric temperature, hydrocarbon and carbon monoxide in a gas generated by the decomposition of the matrix resin of the plastic composite can be oxidized by the catalyst of the inorganic oxide, and the surface temperature of the plastic composite can be significantly raised compared with the atmospheric temperature due to the combustion heat generated by the oxidization.

When the atmospheric temperature is lower than 380°C, the decomposition of the matrix resin does not proceed, and even when the inorganic oxide having a band gap of 4 eV or less is used as the catalyst, the surface temperature of the plastic composite cannot be raised to a sufficient temperature. On the other hand, when the atmospheric temperature exceeds 530°C, and in a case where the inorganic oxide having a band gap of 4 eV or less is used as the catalyst, the surface temperature of the plastic composite rises too much and the reinforcing fiber of the plastic composite is also decomposed or deteriorated, which makes recycling difficult. The atmospheric temperature in the reactor 41 is preferably 380 to 450°C and more preferably 390 to 420°C.

The surface temperature of the plastic composite is 480 to 650°C. In order to sufficiently decompose the matrix resin of the plastic composite, 480°C or higher is required, 490°C or higher is preferable, and 500°C or higher is more preferable. The surface temperature of the plastic composite is preferably at least 50°C or higher, more preferably at least 80°C or higher, and still more preferably at least 100°C or higher higher than the atmospheric temperature. In this way, by setting a difference between the atmospheric temperature in the reactor 41 and the surface temperature of the plastic composite to 50°C or higher, a large amount of energy required to raise the atmospheric temperature by 50°C or higher can be saved by utilizing the combustion heat generated by the oxidation of hydrocarbon and carbon monoxide by-produced by the decomposition of the plastic composite, and the plastic composite can be efficiently processed. The greater the temperature difference, the higher energy efficiency. In addition, the upper limit of this temperature difference is not particularly limited, but is preferably 270°C or lower, for example. Such adjustment of the atmospheric temperature and the surface temperature of the plastic composite can be performed by the type and shape of the catalyst and the disposition of bringing the catalyst into contact with the plastic composite. For example, by using the inorganic oxide having a lower band gap value, using the granular shape or in a combination of the granular shape and a honeycomb shape as the shape of the catalyst, or adopting a disposition in which the layered surfaces of the plastic composite are brought into contact with the catalyst, the surface temperature of the plastic composite can be made higher than the atmospheric temperature by 100°C or higher. Examples

### [Example 1: Effect of catalyst]

Tests were performed to decompose the plastic composite using various catalysts. As the plastic composite, a carbon fiber reinforced resin having a size of width 30 mm × length 200 mm × height 12 mm and epoxy resin as the matrix resin was used. As the catalyst, no catalyst used in Test Example 1, and a honeycomb type denitration catalyst (a ternary catalyst of TiO₂/V₂O₅/WO₃ or MoO₃) with a cell size of 6.4 mm × 6.4 mm × 10 mm) was used in Test Example 2. In Test Example 3, a TiO₂ granular catalyst (CS-200S-24 manufactured by SAKAI CHEMICAL CO., LTD., diameter: 2 to 4 mm) was used as it was. In Test Example 4, CuO (special grade reagent manufactured by KANTO CHEMICAL CO., INC.) was pressure-formed, crushed, rectified into granular shapes having a diameter of 2 to 4 mm, and then used.

In a case where the honeycomb type denitration catalyst was used, as illustrated in Figs. 1A and 1B, all the four side surfaces, which are the layered surfaces of the plastic composite, were disposed so as to be surrounded by the catalyst, and as a whole, the width 50 mm, length 220 mm and the height 50 mm were set. In a case where the granular catalyst is used, as illustrated in Figs. 2A and 2B, all the front surface and the back surface of the plastic composite and all the layered surface were covered with the catalyst, and a disposition was made such that, as a whole, the width was 40 mm, the length was 220 mm, and the height was 32 mm. Each of them was placed at a central position on the stainless steel mesh plate (aperture: 1.5 mm) provided in the reactor.

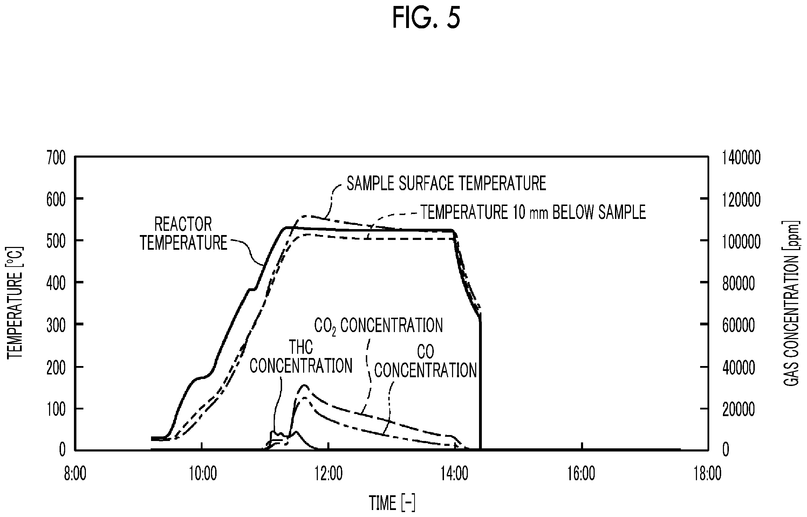

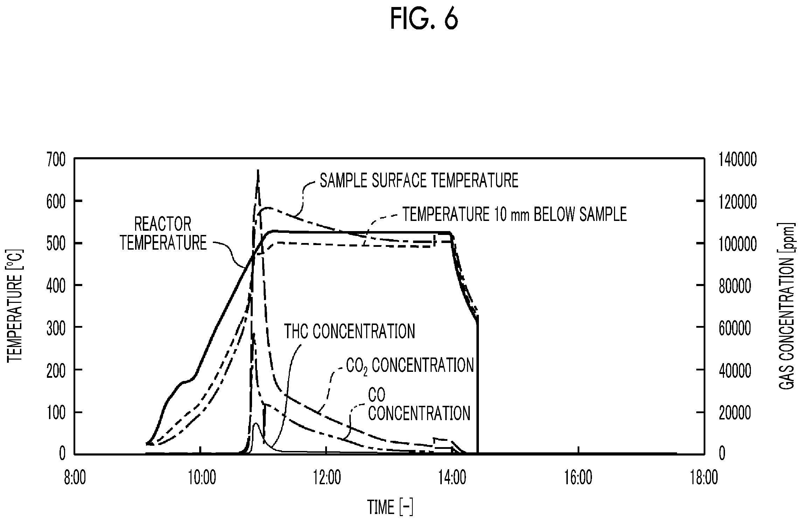

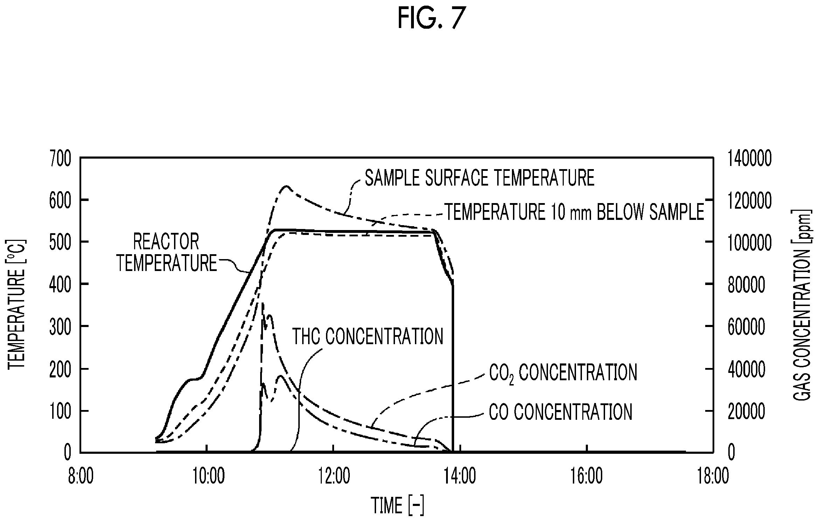

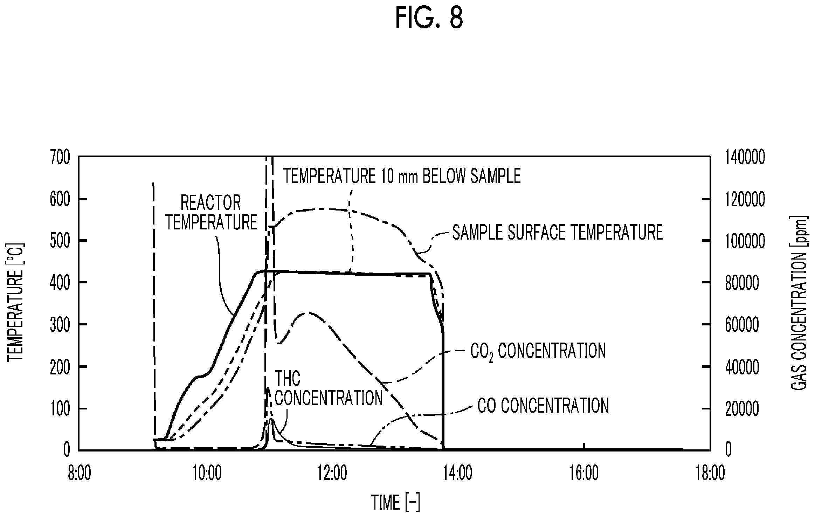

The test conditions were as follows: dry air (moisture: 1.38 vol%) was heated such that the atmospheric temperature in the reactor was 400°C or 500°C while the dry air flows in an upward direction from below the mesh plate at a gas flow rate of 6.7 NL/min and a gas flow velocity of 0.76 Nm/s and was maintained for 2.5 hours after reaching the setting temperature. Then, in addition to the atmospheric temperature (reactor temperature) in the reactor during the test, the temperature of the front surface of the plastic composite (sample surface temperature), the temperature of the catalyst 10 mm below the back surface of the plastic composite (the temperature 10 mm below the sample) was measured, and the respective concentrations of CO, CO₂, and THC contained in the gas in the reactor were measured. Additionally, the weight of the plastic composite after the test was measured, the weight decrease rate of the plastic composite before and after the test was calculated, and whether or not the matrix resin remained in the residual after the test was visually confirmed. The results are shown in Table 1 and Figs. 5 to 8.

**[Table 1]**

| | Catalyst | Weight Decrease Rate (%) | Residual |
|---|---|---|---|
| | | | Presence/Absence of Matrix Resin |
| Test Example 1 | None | 35.2 | Yes |
| Test Example 2 | Honeycomb type denitration catalyst | 36.1 | None |
| Test Example 3 | TiO₂ granular catalyst | 37.6 | None |
| Test Example 4 | CuO granular catalyst | 38.6 | None |

In Test Example 1 in which the setting temperature was 500°C without a catalyst, as illustrated in Fig. 5, after the start of the heating, the THC concentration started to increase from when the temperature 10 mm below the sample reached 400°C, the CO and CO₂ concentrations increased before and after reaching 500°C, and the CO and CO₂ concentrations gradually decreased while the reactor temperature was maintained at 500°C. The sample surface temperature also rose to about 530°C and then gradually decreased to 500°C. The weight decrease rate of the plastic composite was also 35.2%, and the matrix resin still remained in the residual.

In Test Example 2 in which the setting temperature was 500°C using the honeycomb type denitration catalyst, from when the temperature 10 mm below the sample reached 400°C after the start of the heating, the respective concentrations of THC, CO, and CO₂ increased sharply. At the same time, the sample surface temperature also rose sharply. Although this is a conjecture, it is considered that the temperature of the plastic composite rose above the setting temperature and the decomposition of the plastic composite proceeded due to the heat storage effect of a catalyst molded body. No matrix resin remained in the residual, and the weight decrease rate of the plastic composite was as excellent as 36.1%.

In Test Example 3 in which the setting temperature was 500°C using the TiO₂ granular catalyst, from when the temperature 10 mm below the sample reached 400°C after the start of the heating, the respective concentrations of THC, CO, and CO₂ increased and simultaneously the sample surface temperature also rose largely. Similarly to Test Example 2, it is considered that the decomposition of the plastic composite proceeded due to the heat storage effect of the catalyst. No matrix resin remained in the residual, and the weight decrease rate of the plastic composite was 37.6%, which was excellent.

In Test Example 4 in which the setting temperature was 400°C using a CuO granular catalyst, when the temperature 10 mm below the sample reached 400°C after the start of heating, the increase in the THC and CO concentrations was extremely small, while the CO₂ concentration increased sharply. It is considered that this is because the CuO granular catalyst oxidized the generated THC and CO. Also, it is considered that, since the combustion heat of THC and CO was generated in a large amount, the setting temperature was 400°C, but the sample surface temperature rose to a maximum of 550°C, and the sample surface temperature was maintained at 500°C or higher for more than 2 hours. In Test Example 4, the setting temperature was the lowest at 400° C, but no matrix resin remained in the residual, and the weight decrease rate of the plastic composite was the best at 38.6%.

Additionally, it is considered from the results of Test Examples 1 to 4 that the catalysts such as CuO and TiO₂ have the ability to decompose carbon monoxide and hydrocarbon and has a role of preventing the heat generated by the decomposition of the plastic composite from being deprived of by the atmospheric gas.

### [Example 2: relationship between band gap and performance of catalyst at setting temperature of 400°C]

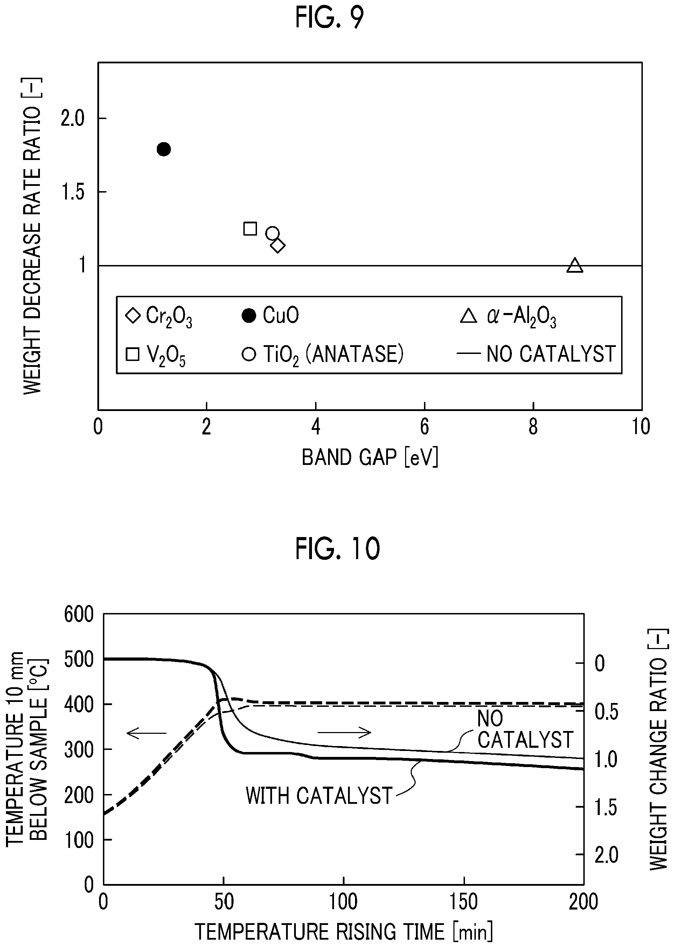

5 g of respective granular catalysts (diameter of 2 to 4 mm) having Cr₂O₃, CuO, amorphous α-Al₂O₃ (alpha type alumina), V₂O₅, and TiO₂ (anatase type) having different band gaps were placed on the front surface of 2 g of the plastic composite that is the same material as in Example 1, and tests were performed in the atmosphere with the setting temperatures of 400°C and the holding time of 1.5 hours. Additionally, as a comparative example, a test was performed under the same conditions even in a case where the catalyst was not placed. The results are shown in Fig. 9. In addition, the vertical axis of the graph in Fig. 9 was not the weight decrease rate (%), but a weight decrease rate ratio (unit: none) that is the ratio of weight decrease rates of the respective catalysts in a case where the weight decrease rate in a comparative example without a catalyst was set to 1.

As illustrated in Fig. 9, it was found that at a low setting temperature of 400°C, a catalyst having a lower band gap has a higher weight decrease rate ratio. Although α-Al₂O₃ had the same weight decrease rate as the comparative example without the catalyst, Cr₂O₃, CuO, V₂O₅, and TiO₂ (anatase type) having a band gap of 4 eV or less exhibited excellent decomposition performance. Among them, CuO having a band gap of 2 eV or less has a weight decrease rate of about 1.8 times that of the comparative example and exhibits the remarkably excellent decomposition performance.

### [Example 3: Performance of denitration catalyst at setting temperature of 400°C]

Regarding the honeycomb type denitration catalyst of Test Example 2 of Example 1 that is a TiO₂-based catalyst, a test was performed under the same conditions as in Example 1 except that the setting temperature of the reactor was set to 400°C, gas (O₂: 21 vol%, H₂O: 1.38 vol%, N₂: the balance) was caused to flow at a flow rate of 1 NL/min, the holding time was set to 4.5 hours, and the weight of the plastic composite during the test was continuously measured. In addition, as a comparative example, a test was performed under the same conditions even in a case where no catalyst was placed. The results are shown in Fig. 10. In addition, the right vertical axis of the graph of Fig. 10 represents a weight change ratio (unit: none) that is the ratio of a change in the weight of the plastic composite after the temperature rising time of 200 minutes with respect to the weight of the plastic composite before the test in the example in a case where the change in the weight of the plastic composite after the temperature rising time of 200 minutes with respect to the weight of the plastic composite before the test in the comparative example without a catalyst was 1.

As illustrated in Fig. 10, in a case where the honeycomb type denitration catalyst was used, the weight of the plastic composite was sharply reduced when the temperature 10 mm below the sample reached 400°C after the start of the heating. On the other hand, in a case where no catalyst was used, the weight of the plastic composite starts to gradually decrease from a side where the temperature 10 mm below the sample reached 400°C, and tens of minutes were needed up to a state where the weight decrease close to a case where the catalyst was used was shown.

### [Example 4: Disposition of catalyst]

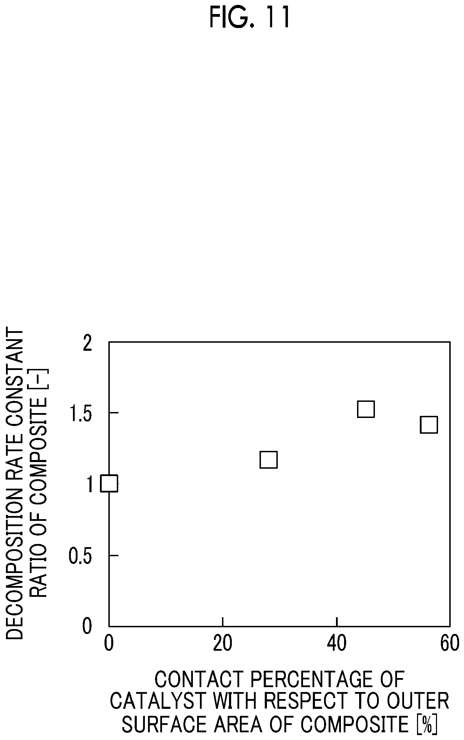

In a case where the plastic composite of the same material as in Example 1 was sized to have a width of 30 mm, a length of 30 mm, and a height of 12 mm, and the honeycomb type denitration catalyst of Test Example 2 of Example 1 was disposed only on the front surface, in a case where the plastic composites were disposed on both the front surface and the back surface, and in a case where the plastic composites were disposed on the four side surfaces that are the layered surfaces, a test was performed with the setting temperature as 500°C under the same conditions as in Example 1 except that a gas (O₂: 21 vol%, H₂O: 1.38 vol%, and N₂: balance) was caused to flow at a flow rate of 1 NL/min. Additionally, as a comparative example, a test was performed under the same conditions even in a case where no catalyst was used. The results are shown in Fig. 11. In addition, the vertical axis of the graph represents the ratio of the respective test examples in a case where a decomposition rate constant, which is the weight decrease rate per time, was determined in each test example and the decomposition rate constant of the comparative example was set to 1.

As illustrated in Fig. 11, in comparison with a comparative example in which no catalyst was used (the contact percentage of the catalyst with respect to an outer surface area of the plastic composite was 0%), it was found that the decomposition rate constant ratio increases as the contact percentage of the catalyst increases, as in a test example in which a catalyst was disposed only on the front surface (the contact percentage was 27.8%) and in a test example in which catalysts were disposed on both the front surface and the back surface (the contact percentage was 55.6%). It can be seen that, compared to a case where the contact percentage of the catalyst is 20% or more and no catalyst is used, the decomposition rate constant ratio can be about 1.2 times or more. Moreover, in a test example in which catalysts were disposed on the four side surfaces that are the layered surfaces (the contact percentage is 44.4%), the contact percentage of the catalyst was lower than that in a test example in which the catalysts were disposed on both the front surface and the back surface but the decomposition rate constant ratio was higher than that in the test example. This indicates that the decomposition rate can be improved by disposing the catalysts on the layered surfaces rather than disposing the catalyst on the front surface or the back surface of the plastic composite. Reference Signs List

10: plastic composite
11: front surface
12: layered surface
13: back surface
20: catalyst
21: cell of honeycomb type catalyst
22: granular catalyst
23: overhanging portion
30: object to be processed in which catalyst is brought into contact with plastic composite
41: reactor
42: transportation means
43: mesh plate
44: recovery means

## Claims

1. A method for decomposing a plastic composite, the method comprising:
bringing the plastic composite into contact with an inorganic oxide catalyst having a band gap of 4 eV or less in a reactor;
setting an atmospheric temperature in the reactor to 380 to 530°C in the presence of oxygen; and
setting a surface temperature of the plastic composite to 480 to 650°C, which is at least 50°C higher than the atmospheric temperature,
wherein the catalyst is a granular catalyst and brought into contact with the plastic composite so as to spread the granular catalyst over a front surface and a back surface of the plastic composite and cover all or some surfaces of layered surfaces of the plastic composite.

2. A method for decomposing a plastic composite, the method comprising:
bringing the plastic composite into contact with an inorganic oxide catalyst having a band gap of 4 eV or less in a reactor;
setting an atmospheric temperature in the reactor to 380 to 530°C in the presence of oxygen; and
setting a surface temperature of the plastic composite to 480 to 650°C, which is at least 50°C higher than the atmospheric temperature,
wherein the catalyst is a honeycomb type catalyst and brought into contact with the plastic composite such that all four surfaces, which are layered surfaces of the plastic composite, are surrounded by the honeycomb type catalyst.

3. The method for decomposing a plastic composite according to claim 1 or 2,
wherein the atmospheric temperature in the reactor is 380 to 450°C.

4. The method for decomposing a plastic composite according to any one of claims 1 to 3,
wherein the inorganic oxide having a band gap of 4 eV or less is one kind or a combination of two or more kinds selected from the group consisting of titanium oxide, vanadium oxide, tungsten oxide, molybdenum oxide, and copper oxide.

5. The method for decomposing a plastic composite according to any one of claims 1 to 4,
wherein the plastic composite and the catalyst are loaded on a portion of a stainless steel mesh plate in the reactor, and oxygen is supplied from below the mesh plate.
